Europäisches Patentamt

European Patent Office

Office européen des brevets

(19)

(11) **EP 0 536 432 B1**

(12) **EUROPÄISCHE PATENTSCHRIFT**

(45) Veröffentlichungstag und Bekanntmachung des Hinweises auf die Patenterteilung:
**19.03.1997 Patentblatt 1997/12**

(51) Int. Cl.⁶: **B62D 13/06**

(21) Anmeldenummer: **91117084.3**

(22) Anmeldetag: **08.10.1991**

(54) **Lenkverfahren für ein mehrteiliges Strassenfahrzeug**

Steering method for a road vehicle with several sections

Procédé de direction d'un véhicule routier composé de plusieurs unités

(84) Benannte Vertragsstaaten:
**FR GB IT**

(43) Veröffentlichungstag der Anmeldung:
**14.04.1993 Patentblatt 1993/15**

(73) Patentinhaber: **Urstöger, Rupert**
**D-91080 Uttenreuth (DE)**

(72) Erfinder: **Urstöger, Rupert**
**D-91080 Uttenreuth (DE)**

(56) Entgegenhaltungen:
EP-A- 0 343 049     CH-A-  568 880
DE-A- 2 352 407     DE-A- 2 460 186
DE-A- 4 012 699     DE-B- 2 631 774
DE-C- 3 841 772     DE-U- 9 015 053
FR-A- 1 256 993

• **ATZ Jahrgang 61 (1959), Heft 1, Seite 18:**
**"Fahrzeuglenkung für geringe**
**Breitenbeanspruchung in Kurven"**

## Beschreibung

Die Erfindung betrifft ein Lenkverfahren für ein mehrteiliges Straßenfahrzeug.

Ein solches Lenkverfahren ist aus dem Zeitschriftenartikel: Poppe Werner: Fahrzeuglenkung für geringe Breitenbeanspruchung in Kurven", in ATZ Jahrg. 61 (1959), Heft 1, S.18 bekannt. Bei Rückwärtsfahrt erfolgt die Lenkung der Räder der hinteren Fahrzeugachse mittels eines gesondert anzukoppelnden und gesondert zu bedienenden separaten Lenkgetriebes. Dieses ist aufwendig, darüberhinaus können Probleme hinsichtlich der Lenkstabilität bei Rückwärtsfahrt auftreten.

Durch die DE-A1-28 10 651 ist ein zweigliedriger Omnibus bekannt, der aus einem vorderen Fahrzeugteil und einem einachsigen Nachläufer besteht. Bei Vorwärtsfahrt ist die Achse dieses Nachläufers abhängig vom Knickwinkel zwischen dem vorderen Fahrzeugteil und dem Nachläufer zwangsgelenkt.

Weitere Lenksysteme bzw. Lenkvorrichtungen für Gelenkwagenzüge sind durch die DE-B2-26 31 774 und durch die DE-B2-24 56 165 bekannt.

Außerdem ist eine Vorrichtung zur Steuerung der Lenkbarkeit einer selbstlenkenden Schlepp- oder Vorlaufachse durch die DE-C2-29 48 181 bekannt. Weiterhin ist in der DE-C2-33 27 240 eine Vorrichtung zur Regelung der Knickstabilität von mehrteiligen Straßenfahrzeugen beschrieben, bei der die Räder an den nachlaufenden Achsen nicht lenkbar sind. Ferner ist in dar Zeitschrift Verkehr und Technik, 1985, Heft 1, Seiten 3-16, in dem Aufsatz "Der Schubgelenkbus - ein modernes, sicheres und bewährtes Fahrzeugkonzept" eine Knickschutzeinrichtung für einen zweigliedrigen Gelenkbus erläutert.

Aufgabe der vorliegenden Erfindung ist es, ein Lenkverfahren für mehrteilige Straßenfahrzeuge mit gelenkig verbundenen, einachsigen, aufgesattelten Fahrzeugteilen zu schaffen, das es ermöglicht, ein solches Straßenfahrzeug in der Hauptfahrtrichtung genau spurfolgend und in der ohne besondere Maßnahmen instabilen Rückwärtsrichtung ebenfalls fahrstabil zu betreiben.

Die Aufgabe wird erfindungsgemäß durch die im Anspruch 1 angegebenen Merkmale gelöst. Vorteilhafte Ausgestaltungen sind in den Unteransprüchen beschrieben.

Durch das erfindungsgemäße Lenkverfahren können mehrteilige Straßenfahrzeuge in beiden Fahrtrichtungen ohne besondere Spurführungseinrichtungen lenkstabil betrieben werden. Dadurch wird der für die Rückwärtsfahrt sich aus der Achsanordnung ergebende lenkunstabile "Spießgang" in eine gegenüber der Hauptfahrtrichtung (Vorwärtsfahrt) zwar weniger genaue, aber trotzdem stabile Spurfahrt übergeführt. Bei Erhöhung des Lenkwinkels auf einen Wert über den halben Knickwinkel wird auch eine Z-förmige durch irreguläre Vorgänge entstandene Fahrzeugfigur in Rückwärtsfahrtrichtung auflösbar.

Ein besonders wichtiger Vorteil des erfindungsgemäßen Lenkverfahrens bezüglich der Erfüllung von Sicherheitsanforderungen ist darin zu sehen, daß die lenkstabile Rückwärtsfahrt mit einfachen mechanischen Elementen erreicht werden kann. Die Änderbarkeit der Hebelverhältnisse ist dem nicht abträglich, weil die Änderung im Fahrzeugstillstand erfolgt und ihre den Fahrtrichtungen zugeordneten Sollpositionen vor Fahrtbeginn überprüft und gesichert werden können. Die Betriebsgenehmigung eines Fahrzeuges mit dem Lenksystem ist also nicht abhängig von dem Nachweis eines fehlersicheren elektronischen Systems.

Der Anspruch 2 beschreibt ein zusätzliches Verstellelement in den Übertragungsmitteln, das eine überlagerte Beeinflussung des Lenkwinkels $\delta$ erlaubt. Mit seiner Hilfe können verschiedene vorteilhafte Zusatzfunktionen des Lenkverfahrens realisiert werden. Beispielsweise ist es damit in Kombination mit Anspruch 4 und 5 möglich, ein seitliches Versetzen des Fahrzeuges zu bewirken, wie es zum Anlegen an bzw. Ablegen von Haltesteigen vorteilhaft ist. Besondere Möglichkeiten ergeben sich durch den Einsatz einer elektronischen Steuer- und/oder Regeleinrichtung nach Anspruch 6. Hiermit können sowohl die erwähnten Haltestellenmanöver optimiert werden als auch Korrekturen am Spurlauf bei Änderungen des Spurradius vorgenommen werden, also am Einlauf in und am Auslauf aus engen Kurven. Zu diesem Zweck können Zustandsdaten der Fahrzeugkonfiguration, z.B. die über Sensoren ermittelten Istwerte der Gelenkknickwinkel und der Radlenkwinkel, und auch Daten über die Lagerelation zwichen Fahrzeug und Umgebung, wie die Abstände zu Haltesteigen, seitlichen Leitborden oder sonstigen Begrenzungen, über ein entsprechendes Rechenprogramm ausgewertet werden und die zusätzlichen Verstellelemente in der Richtung der erwünschten Beeinflussung angesteuert werden.

Die weitere Ausgestaltung nach Anspruch 7 dient dazu, im Fall einer Fehlfunktion der Elektronik eine Rückführung auf die fahrstabile mechanische Basisfunktion in Vorwärts- oder Rückwärtfahrt zu bewirken. Die Rückstelleinrichtung kann aus einer Feder bestehen, die durch die Steuerbewegung eines Hydraulikzylinders als Verstellelement gespannt wurde und bei der Trennung von der Steuer- bzw. Regeleinrichtung gedämpft entspannt wird, sodaß keine ruckartige Lenkbewegung entsteht. Lenkverfahren gemäß den Ansprüchen 11 bis 14 erlauben den Übergang zu einer mechanischen Spurführung in bestimmten Streckenabschnitten und die Rückkehr in den ursprünglichen Lenkmodus.

Weitere Vorteile und Einzelheiten der Erfindung ergeben sich aus der nachfolgenden Beschreibung anhand der Zeichnung und in Verbindung mit den Unteransprüchen. Es zeigen:

FIG 1 ein Diagramm der Spurkinematik bei einem mehrteiligen Straßenfahrzeug,

FIG 2 eine schematische Draufsicht auf das Lenksystem.

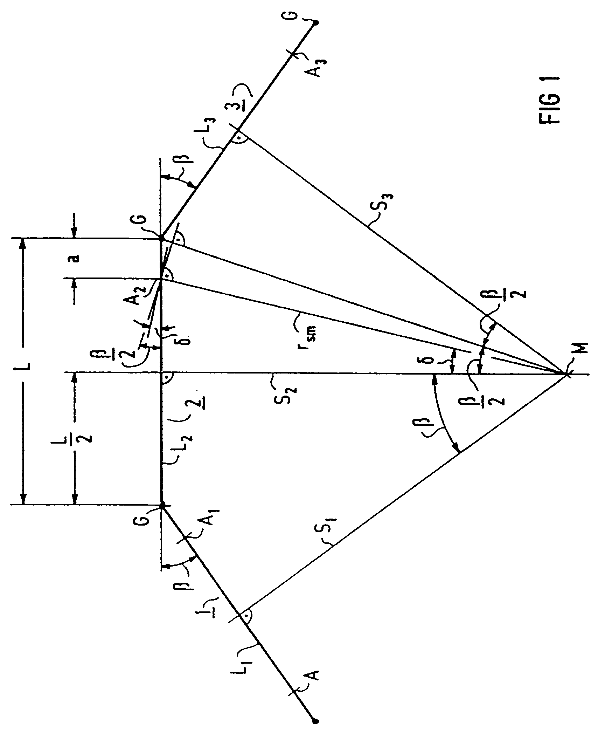

In FIG 1 sind mit $L_1$ die Längsmittelstrecke des zweiachsigen Führungswagens 1 und mit $L_2,L_3$ die Längsmittelstrecken der nachlaufenden Fahrzeugteile (Nachläufer 2,3) bezeichnet. Jeder Nachläufer 2,3 ist über ein Wagengelenk G an dem jeweils vorlaufenden Fahrzeugteil aufgesattelt. Der erste Nachläufer 2 ist ebenfalls über ein Wagengelenk G auf dem Führungswagen 1 aufgesattelt. Der Führungswagen 1 und die Nachläufer 2,3 weisen in einem Abstand a vom Aufsattelpunkt (Gelenk G) des Nachläufers eine gelenkte nachlaufende Achse $A_1,A_2,A_3$ auf. Es ergibt sich damit ein mehrteiliges Straßenfahrzeug, das aus einem Führungswagen 1 und damit sowie untereinander gelenkig verbundenen, einachsigen, aufgesattelten Fahrzeugteilen besteht. Die lenkbare Vorderachse des zweiachsigen Führungswagens 1 ist in FIG 1 mit A bezeichnet.

In der kinetisch stabilen Hauptfahrtrichtung (Vorwärtsfahrt) ergibt sich bei einer Kreisfahrt, wie in FIG 1 dargestellt, zwischen zwei benachbarten Fahrzeugteilen 1,2 bzw.2,3 jeweils ein Knickwinkel β . Der Scheitelpunkt des Knickwinkels β ist jeweils durch den Aufsattelpunkt des Nachläufers auf dem vorlaufenden Fahrzeugteil bestimmt. Die Lenkübersetzung zwischen Knickwinkel und Lenkwinkel wird erfindungsgemäß so gewählt, daß bei einer Kreisfahrt der Spurkreismittelpunkt M im Schnittpunkt der Senkrechten $S_1,S_2,S_3$ auf die Mitten der Längsmittelstrecken $L_1,L_2,L_3$ der benachbarten Fahrzeugteile liegt. Der mittlere Spurkreis mit dem in FIG 1 eingezeichneten mittleren Spurkreisradius $r_{sm}$ schneidet also gleichgroße Längen an allen Enden der Längsmittelstrecken der benachbarten Fahrzeugteile ab.

Durch die Tangente am mittleren Spurkreis wird der in FIG 1 mit δ bezeichnete mittlere theoretische Lenkwinkel für die Hauptfahrtrichtung bestimmt, wobei im vorliegenden Fall die folgende Beziehung gilt:

$$\delta = \arctan \frac{(L-2a)\ \tan\ (\beta/2)}{L}\ ;$$

mit L ist hierbei die Wagenteil-Länge bezeichnet.

Der in FIG 1 dargestellte Zusammenhang ergibt in dem praktisch zu nutzenden Winkelbereich, daß der Lenkwinkel δ annähernd proportional zum Knickwinkel β ist und auch mit einfachen mechanischen beziehungsweise hydraulischen Mitteln ein sehr gutes Spurlaufverhalten zu erreichen ist. Die Abweichungen liegen etwa in der Größe von ohnehin unvermeidlichen Lenkfehlern, wie z.B. Elastizitäten, Schräglaufwinkeln und dynamischen Effekten.

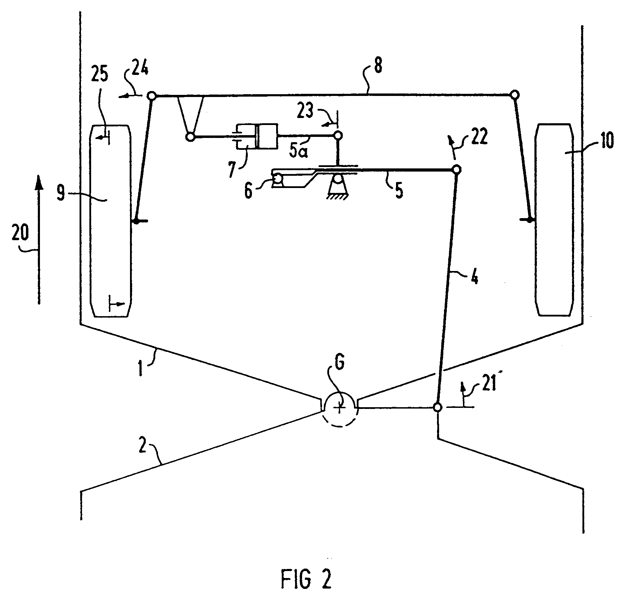

In FIG 2 ist in Hauptfahrtrichtung 20 gesehen mit 1 ein vorauslaufendes Fahrzeugteil und mit 2 ein nachlaufendes Fahrzeugteil bezeichnet. Bei dem vorauslaufenden Fahrzeugteil 1 kann es sich hierbei sowohl um den zweiachsigen Führungswagen 1 - wie in FIG 2 dargestellt - als auch um einen der einachsigen Nachläufer handeln.

Die lenkbaren Räder 9 und 10, in FIG 2 nur im vorauslaufenden Fahrzeugteil 1 dargestellt, sind über eine Spurstange 8 miteinander verbunden. Die Räder 9 und 10 sind in nicht näher dargestellter Weise gelagert und im Fahrzeugteil 1 gehalten. Für die Räder 9 und 10 wäre hierbei eine Einzelradaufhängung mit Achsschenkellenkung denkbar.

Die Räder 9 und 10 sind in Abhängigkeit vom Knickwinkel β des nächstliegenden Wagengelenks G mit Hilfe von Übertragungsmitteln lenkbar. In dem in Fig. 2 dargestellten Lenksystem umfassen die Übertragungsmittel:

- ein Übertragungsgestänge 4, das einerseits gelenkig mit dem nachlaufenden Fahrzeugteil 2 verbunden ist und andererseits an einem veränderbaren Hebelarm 5 angelenkt ist,
- einen in seiner Länge veränderbaren Hebelarm 5, der an seinem freien Ende mit einem Verstellantrieb 6 gekoppelt ist,
- einen nicht näher bezeichneten Hebelarm fester Länge, der über ein Führungsteil die kraftschlüssige Verbindung von dem veränderbaren Hebelarm 5 zu dem Übertragungsgestänge 5a herstellt,
- ein zusätzliches Verstellelement 7, das in das Übertragungsgestänge 5a eingefügt und als zweiseitig wirkender Hydraulikzylinder ausgebildet ist, und
- eine Spurstange 8, die über einen nicht näher bezeichneten Hebel mit dem zusätzlichen Verstellelement 7 verbunden ist.

Der Verstellantrieb 6 dient zur Änderung der wirksamen Länge des Hebelarms 5 und damit zur Änderung der Lenkübersetzung zwischen den für die Vorwärts- und die Rückwärtsfahrt erforderlichen Werten.

Bei einer Bewegung der Übertragungsmittel 4 und 5 infolge der Ausbildung eines Knickwinkels (β) in die mit den Pfeilen 21 und 22 bezeichneten Richtungen ergibt sich für das zusätzliche Verstellelement 7 sowie die Spurstange 8 die durch die Pfeile 23 und 24 dargestellte Bewegung. Für die lenkbaren Räder 9 und 10 resultiert daraus der mit Pfeil 25 bezeichnete Lenkeinschlag mit einem dem jeweils erreichten Knickwinkel (β) entsprechenden Lenkwinkel (δ).

Das zusätzliche Verstellelement 7 dient der überlagerten Beeinflussung des Lenkwinkels (δ), um z. B. eine genauere Spurfolge bei Änderungen des Spurradius zu erreichen und Haltestellen- oder andere Sondermanöver des mehrteiligen Strassenfahrzeuges durchzuführen.

## Patentansprüche

1. Lenkverfahren für ein mehrteiliges Straßenfahrzeug, das aus einem zweiachsigen, an der Vorderachse (A) gelenkten, an der Hinterachse (A1) zwangsgelenkten Führungswagen (1) und aus mehreren einachsigen, zwangsgelenkten Nachläufern (2, 3) besteht, die an dem jeweils vorlaufenden Fahrzeugteil gelenkig aufgesattelt sind, wobei der Lenkwinkel ($\delta$) der Räder einer nachlaufenden Achse (A1, A2, A3) mit Hilfe von Übertragungsmitteln in Form eines Übertragungsgestänges (4, 5, 5a, 8) oder eines Übertragungsgestänges (4, 5, 5a, 8) mit zusätzlichen hydraulischen Übertragungseinrichtungen knickwinkelabhängig beeinflusst wird, wobei die Lenkübersetzung (Verhältnis von Knickwinkel $\beta$ zu Lenkwinkel $\delta$) bei Vorwärtsfahrt derart eingestellt ist, daß der Spurkreismittelpunkt (M) im wesentlichen im Schnittpunkt der Senkrechten (S1, S2, S3) auf die Mitten der Längsmittelstrecken (L1, L2, L3) der Fahrzeugteile liegt, dadurch gekennzeichnet, daß bei Rückwärtsfahrt die Lenkübersetzung selbsttätig durch eine elektromotorisch oder hydraulisch bewirkte Änderung von Hebelverhältnissen im Übertragungsgestänge verkleinert wird.

2. Lenkverfahren nach Anspruch 1, dadurch gekennzeichnet, daß das Übertragungsgestänge (4, 5, 5a, 8) wenigstens ein zusätzliches hydraulisches oder elektromotorisches Verstellelement (7) enthält, welches eine überlagerte Beeinflussung des Lenkwinkels ($\delta$) in beiden Fahrtrichtungen ermöglicht.

3. Lenkverfahren nach Anspruch 2, dadurch gekennzeichnet, daß die überlagerte Beeinflußung des Lenkwinkels ($\delta$) kontinuierlich erfolgt.

4. Lenkverfahren nach Anspruch 2 oder 3, dadurch gekennzeichnet, daß der Lenkwinkel ($\delta$) mittels des zusätzlichen Verstellelements (7), ausgehend von einer neutralen Nullstellung, in beiden Richtungen (im positiven oder negativen Drehsinn) veränderbar (vergrößer- oder verkleinerbar) ist.

5. Lenkverfahren nach einem der Ansprüche 2 bis 4, dadurch gekennzeichnet, daß das zusätzliche Verstellelement (7) vom Fahrer direkt oder indirekt unter Berücksichtigung limitierender Parameter ansteuerbar ist.

6. Lenkverfahren nach einem der Ansprüche 2 bis 5, dadurch gekennzeichnet, daß das zusätzliche Verstellelement (7) von einer elektronischen Steuer- und/oder Regeleinrichtung ansteuerbar ist.

7. Lenkverfahren nach Anspruch 6, dadurch gekennzeichnet, daß die Steuer- und/oder Regeleinrichtung im Störungsfall von dem jeweiligen Verstellelement (7) getrennt wird und das betreffende Verstellelement (7) durch eine zuvor von der Steuer- und/oder Regeleinrichtung freigegebene fehlerredundante mechanische Rückstelleinrichtung in die neutrale Nullstellung zurückgeführt wird.

8. Lenkverfahren nach Anspruch 6 oder 7, dadurch gekennzeichnet, daß die elektronische Steuer- und/oder Regeleinrichtung auf der Basis von Knick-winkeln ($\beta$) und/oder auf der Basis der Abweichungen von einer Sollspur unter Berücksichtigung der Fahrgeschwindigkeit einen fahrdynamisch notwendigen Korrekturwinkel ermittelt.

9. Lenkverfahren nach Anspruch 8, dadurch gekennzeichnet, daß die Abweichungen von der Sollspur durch mechanische Abtasteinrichtungen ermittelbar sind.

10. Lenkverfahren nach Anspruch 8, dadurch gekennzeichnet, daß die Abweichungen von der Sollspur durch elektronische Positionserfassungseinrichtungen ermittelbar sind.

11. Lenkverfahren nach einem der Ansprüche 1 bis 10, dadurch gekennzeichnet, daß die Übertragungsmittel entkoppelbar sind und die Lenkung von Spurführungsrollen übernommen wird.

12. Lenkverfahren nach Anspruch 11, dadurch gekennzeichnet, daß die Entkopplung durch seitliche Kräfte an den Spurführungsrollen eingeleitet und beendet wird.

13. Lenkverfahren nach Anspruch 11 oder 12, dadurch gekennzeichnet, daß die Entkopplung durch Überbrückung der Hydraulik des zusätzlichen Verstellelements (7) erfolgt.

14. Lenkverfahren nach Anspruch 11 bis 13, dadurch gekennzeichnet, daß nach Beendigung der Entkopplung eine Zentrierung des zusätzlichen Verstellelements (7) in die neutrale Nullstellung erfolgt.

**Claims**

1. Steering method for a road vehicle with several sections which consists of a two-axle guide car (1), which is steered at the front axle (A) and forcibly steered at the rear axle (A1), and of several single-axle, forcibly-steered trailers (2, 3), each of which is mounted in an articulated manner on the respectively preceding vehicle section, wherein the steering angle ($\delta$) of the wheels of an axle (A1, A2, A3) which moves along behind is affected in a manner which is dependent on the bend angle with the aid of transmission means in the form of a transmission gear (4, 5, 5a, 8) or a transmission gear (4, 5, 5a, 8) having additional hydraulic transmission devices, wherein the steering ratio (ratio of bend angle $\beta$ to steering angle $\delta$) in the case of forwards travel is adjusted in such a way that the turning circle centre (M) lies substantially at the intersection point of the perpendiculars (S1, S2, S3) from the centres of the longitudinal centre sections (L1, L2, L3) of the vehicle sections, characterised in that in the case of backwards travel, the steering ratio is automatically reduced by an alteration of lever ratios in the transmission gear, which alteration is effected electromotively or hydraulically.

2. Steering method according to claim 1, characterised in that the transmission gear (4, 5, 5a, 8) contains at least one additional hydraulic or electromotive adjusting element (7), which permits an overriding affect on the steering angle ($\delta$) in both directions of travel.

3. Steering method according to claim 2, characterised in that the overriding affect on the steering angle ($\delta$) takes place continuously.

4. Steering method according to claim 2 or 3, characterised in that by means of the additional adjusting element (7), the steering angle ($\delta$) can be altered (can be made larger or smaller) in both directions (in the positive or negative direction of rotation), starting from a neutral zero position.

5. Steering method according to one of the claims 2 to 4, characterised in that the additional adjusting element (7) can be activated by the driver directly or indirectly, taking into account limiting parameters.

6. Steering method according to one of the claims 2 to 5, characterised in that the additional adjusting element (7) can be activated by an electronic control and/or regulating device.

7. Steering method according to claim 6, characterised in that in the event of malfunction, the control and/or regulating device is separated from the respective adjusting element (7) and the respective adjusting element (7) is brought back into the neutral zero position by an error-redundant mechanical resetting device which was previously released by the control and/or regulating device.

8. Steering method according to claim 6 or 7, characterised in that the electronic control and/or regulating device establishes a correction angle, which is necessary in terms of travel dynamics, on the basis of bend angles ($\beta$) and/or on the basis of the deviations from a desired track, taking into account the travelling speed.

9. Steering method according to claim 8, characterised in that the deviations from the desired track can be established by mechanical scanning devices.

10. Steering method according to claim 8, characterised in that the deviations from the desired track can be established by electronic position-detecting devices.

11. Steering method according to one of the claims 1 to 10, characterised in that the transmission means can be uncoupled and the steering is taken over by tracking rollers.

12. Steering method according to claim 11, characterised in that the uncoupling is initiated and ended by lateral forces at the tracking rollers.

13. Steering method according to claim 11 or 12, characterised in that the uncoupling takes place by bridging the hydraulics of the additional adjusting element (7).

14. Steering method according to claims 11 to 13, characterised in that after the uncoupling has ended, a centring of the additional adjusting element (7) into the neutral zero position takes place.

**Revendications**

1. Procédé de direction d'un véhicule routier composé de plusieurs unités, qui est constitué d'une voiture (1) de tête à deux essieux, dirigée par l'essieu avant (A) et à direction forcée par l'essieu arrière (A1), et de plusieurs remorques (2,3) à un essieu et à direction forcée, qui sont attelées de manière articulée à la partie respectivement précédente du véhicule, dans lequel on influe sur l'angle ($\delta$) de braquage des roues d'un essieu (A1,A2,A3) traîné, à l'aide de moyens de transmision sous forme d'une tringlerie (4,5,5a,8) de transmission ou d'une tringlerie (4,5,5a,8) de transmission ayant des dispositifs de transmission hydrauliques supplémentaires, en fonction de l'angle à l'articulation, le rapport de direction (rapport de l'angle $\beta$ à l'articulation à l'angle $\delta$ de direction) étant réglé en marche avant, de telle sorte que le centre (M) du cercle de braquage soit sensiblement au point d'intersection des médiatrices (S1,S2,S3) des longueurs médianes (L1,L2,L3) des parties du véhicule, caractérisé en ce que l'on diminue en marche arrière le rapport de direction automatiquement par une modification, provoquée par moteur électrique ou de manière hydraulique, de rapports de levier dans la tringlerie de transmission.

2. Procédé de direction suivant la revendication 1, caractérisé en ce que la tringlerie (4,5,5a,8) de transmission comprend au moins un élément (7) de réglage supplémentaire hydraulique ou à moteur électrique, qui donne la possibilité d'influer en superposition sur l'angle ($\delta$) de direction dans les deux sens de marche.

3. Procédé de direction suivant la revendication 2, caractérisé en ce que la superposition de l'influence de l'angle ($\delta$) de direction s'effectue de manière continue.

**4.** Procédé de direction suivant la revendication 2 ou 3, caractérisé en ce que l'on peut modifier (augmenter ou diminuer) l'angle ($\delta$) de direction au moyen de l'élément (7) de réglage supplémentaire en partant d'une position de zéro neutre, dans les deux sens (dans le sens positif ou négatif de rotation).

**5.** Procédé de direction suivant l'une des revendications 2 à 4, caractérisé en ce que l'élément (7) de réglage supplémentaire peut être commandé directement par le conducteur du véhicule ou indirectement en tenant compte de paramètres de limitation.

**6.** Procédé de direction suivant l'une des revendications 2 à 5, caractérisé en ce que l'élément (7) de réglage supplémentaire peut être commandé par un dispositif électronique de commande et/ou de régulation.

**7.** Procédé de guidage suivant la revendication 6 caractérisé en ce que l'on sépare de l'élément (7) de réglage en cas de perturbations le dispositif de commande et/ou de régulation et l'on remet l'élément (7) de réglage concerné dans la position de zéro neutre par un dispositif de rappel mécanique à redondance d'erreurs, libéré au préalable du dispositif de commande et/ou de régulation.

**8.** Procédé de direction suivant la revendication 6 ou 7, caractérisé en ce que les dispositifs électroniques de commande et/ou de régulation déterminent, sur la base d'angles ($\beta$) aux articulations et/ou des écarts par rapport à une voie de consigne, un angle de correction nécessaire lorsque l'on roule, en tenant compte de la vitesse de marche.

**9.** Procédé de direction suivant la revendication 8, caractérisé en ce que l'on peut déterminer les écarts par rapport à la voie de consigne par des dispositifs d'échantillonnage mécanique.

**10.** Procédé de direction suivant la revendication 8, caractérisé en ce que l'on peut déterminer les écarts par rapport à la voie de consigne par des dispositifs électronique de détection de position.

**11.** Procédé de direction suivant l'une des revendications 1 à 10 , caractérisé en ce que l'on peut découpler les moyens de transmission et la direction peut être prise en charge par des galets de guidage de voie.

**12.** Procédé de direction suivant la revendication 11, caractérisé en ce que l'on déclenche le découplage et on y met fin par des forces latérales sur les galets de guidage de voie.

**13.** Procédé de direction suivant la revendication 11 ou 12, caractérisé en ce que l'on effectue le découplage en court-circuitant le circuit hydraulique de l'élément (7) de réglage supplémentaire.

**14.** Procédé de direction suivant la revendication 11 à 13, caractérisé en ce que l'on effectue, après avoir mil fin au découplage, un centrage de l'élément (7) de réglage supplémentaire dans la position de zéro neutre.

FIG 1

FIG 2